# EUROPÄISCHE PATENTSCHRIFT

(11) **EP 2 841 191 B1**
(45) Veröffentlichungstag und Bekanntmachung des Hinweises auf die Patenterteilung: **09.11.2016**
(21) Anmeldenummer: 13719220.9
(22) Anmeldetag: 26.04.2013
(51) Int. Cl.: B01F 15/06, B01F 13/08, B01F 15/00, G01K 1/02, G01F 23/22

(54) **MAGNETRÜHRER MIT EINER TEMPERATURMESSVORRICHTUNG**
MAGNETIC STIRRER WITH A TEMPERATURE MEASURING DEVICE
AGITATEUR MAGNÉTIQUE ÉQUIPÉ D'UN DISPOSITIF DE MESURE DE TEMPÉRATURE

(30) Priorität: 27.04.2012 DE 102012008612
(43) Veröffentlichungstag der Anmeldung: 04.03.2015
(73) Patentinhaber: IKA - Werke GmbH & Co. KG, 79219 Staufen (DE)
(72) Erfinder: EBLE, Erhard, 79189 Bad Krozingen (DE); BRAUCH, Uwe, 79423 Heitersheim (DE); HENSLE, Thomas, 79206 Breisach (DE); BABEL, Christian, 79098 Freiburg (DE)
(74) Vertreter: Maucher Jenkins Patent- und Rechtsanwälte
(86) Internationale Anmeldenummer: PCT/EP2013/001258
(87) Internationale Veröffentlichungsnummer: WO 2013/159936

(56) Entgegenhaltungen:
- EP-A2- 1 847 365
- DE-A1- 3 342 249
- DE-A1-102006 001 623
- JP-A- S5 682 422
- JP-A- S55 137 032
- US-A- 3 653 262
- US-A1- 2003 219 062
- US-A1- 2005 183 582

## Beschreibung

Die Erfindung betrifft einen Magnetrührer mit einem Rührantrieb, mit einem Gefäß oder Becherglas, mit einer Heizplatte als Aufstellfläche für das Gefäß oder Becherglas und mit einem in das Gefäß oder Becherglas einlegbaren, von dem Rührantrieb angetriebenen Rührmagneten sowie mit einer Temperaturmessvorrichtung mit einem Thermometer mit einem Temperatursensor auf elektrischer Basis, die in ein in dem Gefäß oder Becherglas befindliches Medium eintauchbar oder eingetaucht ist.

Aus DE 10 2006 001 623 A1 sind ein Behälter und ein Verfahren zum Mischen von Medien bekannt. Der Behälter weist eine Mehrzahl in seiner Wandung eingelassener Sensoren zur Überwachung verschiedener Parameter auf.

US 2003/0219062 A1 offenbart eine Vorrichtung und ein Verfahren zur Temperaturmessung und Temperaturüberwachung mit einer Mehrzahl von in unterschiedlichen Positionen angeordneten Temperatursensoren.

US 2005/0183582 A1 zeigt eine Steuereinrichtung für einen Magnetrührer, mit der ein Rührvorgang in Abhängigkeit einer gemessenen Temperatur gesteuert bzw. geregelt werden kann.

Ein Magnetrührer der eingangs definierten Art, entsprechend dem Oberbegriff des Anspruchs 1, mit einer Temperaturmessvorrichtung ist bereits aus DE 33 42 249 C2 bekannt, wobei mit der Temperaturmessvorrichtung eine Änderung der Temperatur des in dem Gefäß oder in dem Becherglas befindlichen Mediums gemessen werden kann.

Dabei können allerdings in einem solchen Gefäß sehr unterschiedliche Temperaturen und auch unterschiedliche Füllzustände bestehen, die von der bisherigen Temperaturmessvorrichtung jedoch nicht erkannt werden können.

Es besteht daher die Aufgabe, einen Magnetrührer der eingangs definierten Art zu schaffen, mit dem die Temperatur und die Temperaturverteilung des Mediums genauer gemessen werden kann.

Zur Lösung dieser Aufgabe ist ein Magnetrührer entsprechend Anspruch 1 vorgesehen, ist vorgesehen, dass die Temperaturmessvorrichtung wenigstens drei in Gebrauchsstellung in das zu messende Medium eintauchbare, in unterschiedlicher Höhe und/oder mit vertikalem Abstand zueinander angeordnete Temperatursensoren aufweist. Dadurch ist es möglich, innerhalb des Gefäßes mit nur einer Temperaturmessvorrichtung in unterschiedlichen Abständen zu der Heizplatte die Temperatur des Mediums während des Erhitzens zu erfassen. Da die Erwärmung in der Regel aufgrund der in Gebrauchsstellung unterhalb des Gefäßes oder Becherglases angeordneten Heizplatte von unten ausgeht und die Temperatur innerhalb des Mediums demgemäß von unten nach oben hin abnimmt, ist es möglich, insbesondere während des Aufheizens des Mediums, aber auch im weiteren Betrieb, mit Hilfe der Temperaturmessvorrichtung eine Temperaturschichtung bzw. eine Temperaturverteilung innerhalb des Gefäßes zu erkennen.

Somit ist es beispielsweise möglich, einen Rührvorgang, der zur Homogenisierung der Temperatur innerhalb des Mediums beitragen kann, in Abhängigkeit der erfassten Temperaturverteilung zu steuern und/oder zu regeln. Ebenso kann eine Abnahme des Pegels des Mediums im Inneren des Gefäßes oder Becherglases durch Verdunstung dann erkannt werden, wenn bei absinkendem Pegel des Mediums die einzelnen Temperatursensoren nach und nach aus dem Medium "heraustreten" und dann von dem in der Regel im Vergleich zu der Umgebungstemperatur wärmeren Medium im Inneren des Gefäßes nicht mehr umgeben sind, wobei sich der gemessene Temperaturwert mit dem Austritt des Temperatursensors aus dem Medium verändert, insbesondere verringert.

Ebenso kann ein Anstieg des Pegels, der bei einem Aufkochen bzw. Aufschäumen oder Quellen des Mediums zu erwarten sein kann, in analoger Weise detektiert werden.

Um eine Kollision des bei Betrieb des Magnetrührers im Inneren des Gefäßes oder Becherglases rotierenden Rührmagneten mit der in das Gefäß oder Becherglas in Gebrauchsstellung eingetauchten Temperaturmessvorrichtung vermeiden zu können, kann es zweckmäßig sein, wenn ein in Gebrauchsstellung in das Medium eingetauchtes Ende der Temperaturmessvorrichtung einen Abstand zu einem Boden des Gefäßes oder Becherglases aufweist. Dieser Abstand kann dabei mindestens einer Höhe und/oder einer Dicke des in dem Becherglas in Gebrauchsstellung befindlichen Rührmagneten entsprechen oder, wie aus der DE 33 42 249 C2 bereits bekannt, sogar größer als die Dicke oder Höhe des Rührmagneten sein. So kann selbst bei Rührmagneten, die eine dem Durchmesser des Gefäßes oder Becherglases entsprechende Länge haben, eine Kollision des in dem Becherglas oder Gefäß rotierenden Rührmagneten während des Betriebs des Magnetrührers mit der in ihrer Gebrauchsstellung befindlichen Temperaturmessvorrichtung vermieden werden.

Dabei kann es besonders zweckmäßig sein, wenn der in Gebrauchsstellung vertikale Abstand zwischen den Temperatursensoren die jeweils wenigstens zwei Zentimeter, bevorzugt etwa einen Zentimeter, gegebenenfalls etwa einen halben Zentimeter oder weniger beträgt oder einen Zwischenwert hat. Mit derartigen dimensionierten vertikalen Abständen zwischen den einzelnen Temperatursensoren kann die sich einstellende Temperaturverteilung mit einer guten Genauigkeit und einer guten Auflösung erfasst werden.

Bei einer zweckmäßigen Ausgestaltungsform der Erfindung kann vorgesehen sein, dass das die Temperaturmessvorrichtung bildende Thermometer stabförmig ausgebildet und/oder mit einem seiner beiden Enden in das Medium eintauchbar ist. An einem stabförmigen Thermometer können die wenigstens drei Temperatursensoren mit ausreichendem vertikalem Abstand zueinander angeordnet sein. Ferner ist es möglich, bei einem entsprechend lang ausgebildeten stabförmigen Thermometer eine Temperaturverteilung und auch den Pegel eines Mediums über einen entsprechend großen vertikalen Bereich zu erkennen oder zu überwachen. Darüber hinaus kann die stabförmige Gestaltung des Thermometers auch für die Handhabung der Temperaturvorrichtung, insbesondere bei sehr heißen Medien, für einen Benutzer der Temperaturmessvorrichtung sicherer sein, da dieser bei der Handhabung der Temperaturmessvorrichtung einen ausreichenden Sicherheitsabstand zu dem Gefäß mit dem zu messenden Medium einhalten kann.

Um die Temperaturmessvorrichtung auch für eine längere Zeit in einem Medium eingetaucht zu lassen, ohne dass der Benutzer die Temperaturmessvorrichtung in seiner Hand halten muss, ist es vorgesehen, daß die Temperaturmessvorrichtung an einem Rand des Gefäßes lösbar anbringbar ist.

Zu diesem Zweck weist die Temperaturvorrichtung an einem dem in Gebrauchsstellung in das zu messende Medium eingetauchten Ende entgegengesetzten zweiten Ende eine mechanische Halterung zum Einhängen an dem Rand des Gefäßes, insbesondere einen Haken oder ein Klemmelement oder einen Saugnapf, und/oder als Halterung eine Stativbefestigung auf und/oder ist das in Gebrauchsstellung nicht in das Medium eingetauchte Ende der Temperaturmessvorrichtung selbst hakenförmig ausgebildet.

Um die Temperaturmessvorrichtung an unterschiedlich hohen Gefäßen und/oder Bechergläsern befestigen zu können, kann es zweckmäßig sein, wenn die Temperaturmessvorrichtung gegenüber ihrer Halterung höhenverstellbar ist. Damit kann die Temperaturmessvorrichtung bei einem beispielsweise besonders tiefen Gefäß oder Becherglas soweit gegenüber der an dem Rand befindlichen Halterung abgesenkt werden, dass die Temperatursensoren der Temperaturmessvorrichtung in das zu messende Medium und an eine für die Messung beabsichtigte Position gelangen können.

Dabei kann es günstig sein, wenn wenigstens einer der Temperatursensoren oder alle Temperatursensoren an einer Seite der Temperaturmessvorrichtung angeordnet sind, die in Gebrauchsstellung der Mitte des Gefäßes zugewandt ist. Somit ist es möglich, dass die Temperatursensoren die im Inneren des Gefäßvolumens herrschende Temperatur und nicht etwa eine aufgrund der Nähe zu dem Rand des Gefäßes bzw. zu einer Seitenwand des Gefäßes zu geringe Temperatur messen. Dies kann von Bedeutung sein, wenn bei einer Erhitzung eines Mediums ein maximaler Temperaturwert nicht überschritten werden darf.

Wenn die Temperatursensoren der Temperaturmessvorrichtung als Widerstandsthermometer ausgebildet sind, ist eine Erkennung der Änderung des Füllstandes bzw. die Erkennung einer Pegelveränderung innerhalb des Gefäßes auch dann möglich, wenn die Temperatur des Mediums identisch mit der Temperatur der Umgebungsluft außerhalb des Mediums ist.

Da das Thermometer als Widerstandsthermometer ausgebildet ist, kann der für die Messung erforderliche Messstrom zu einer Eigenerwärmung der einzelnen Sensoren führen. Bei einem nur von Luft umgebenen Temperatursensor kann diese Erwärmung abweichend von einem in einem flüssigen Medium befindlichen Temperatursensor sein. Da die Umgebungsluft und das für gewöhnlich dichtere Medium unterschiedliche Temperaturleitwerte und Wärmekapazitäten haben, kann ein zusätzlicher in der Eigenerwärmung begründeter Wärmeeintrag in die Temperatursensoren unterschiedlich schnell von ihnen abgegeben werden. Der von der Luft umgebene Temperatursensor kann im Vergleich zu dem von dem Medium umgebenen Temperatursensor gegen eine Abkühlung abweichend thermisch "isoliert" sein.

Somit kann sich der von der Luft, die in den meisten Fällen eine geringere Wärmeleitfähigkeit als das dichtere Medium hat, umgebene Temperatursensor unter dem Einfluss des Messstroms abweichend erwärmen. Dieser Effekt kann von dem Temperatursensor gemessen und dazu genutzt werden, um festzustellen, welcher der Temperatursensoren aufgrund eines abnehmenden Pegels des Mediums bereits nicht mehr von dem Medium umgeben, sondern bereits oberhalb des Pegels des Mediums also an der Luft ist.

Ein Absinken des Pegels des Mediums im Inneren des Gefäßes oder Becherglases - beispielsweise aufgrund von Verdunstung oder einem Einkochen des Mediums - wird mit Hilfe der Temperaturmessvorrichtung gut erkannt werden dadurch, daß wenigstens ein Temperatursensor in Gebrauchsstellung der Temperaturmessvorrichtung außerhalb des zu messenden Mediums oder außerhalb des Gefäßes angeordnet ist. So kann der außerhalb des Gefäßes oder außerhalb des Mediums angeordnete Temperatursensor die Temperatur der Umgebung messen und diesen Temperaturmesswert als Referenz und/oder Vergleichsmesswert für die von den übrigen Temperatursensoren ermittelten Temperaturen bereitstellen. Insbesondere bei über die Umgebungstemperatur erhitzten Medien ist es dann möglich, dass ein Absinken des Pegels des Mediums durch einen Vergleich der Messwerte der Temperatursensoren ermittelt werden kann.

Wenn wenigstens einer der Temperatursensoren mit einer Steuer- und/oder Regeleinrichtung für die Heizplatte und/oder für einen Rührantrieb, insbesondere mit einem Rührantrieb eines Magnetrührers, verbunden ist, kann der Erwärmungsvorgang des Mediums in Abhängigkeit von der gemessenen Temperaturverteilung und/oder der Verdunstung bzw. Verdampfung des Mediums gesteuert werden. Bei einer erkannten inhomogenen Temperaturverteilung im Medium ist es zum Beispiel möglich, die Drehzahl des Rührantriebs zu steigern, so dass dieser zu einer gleichmäßigeren und schnelleren Verteilung des unterschiedlich erwärmten Mediums und somit zu einer Homogenisierung der Temperaturverteilung in dem gesamten Gefäß oder Becherglas beitragen kann. Des Weiteren ist es möglich, beispielsweise die Heizplatte zu deaktivieren, sobald das Medium durch Verdampfen oder Verdunsten aufgrund des Wärmeeintrages der Heizplatte einen zuvor definierten Pegel, der mit Hilfe der Temperatursensoren in zuvor beschriebener Weise ermittelt werden kann, erreicht hat. Wird die Heizplatte rechtzeitig abgeschaltet bzw. die Heizleistung reduziert, kann verhindert werden, dass dieser zuvor definierte Minimal-Pegel durch weiteren Wärmeeintrag in das Medium unterschritten wird. Dies kann auch unter Sicherheitsaspekten von Bedeutung sein, da sich die Heizplatte rechtzeitig abstellen lässt, bevor das gesamte Medium aus dem Inneren des Gefäßes oder Becherglases verdampft ist.

In ähnlicher Weise ist es auch möglich ein Überkochen oder übermäßiges Aufschäumen des Mediums zu verhindern. So kann die Heizplatte ausgeschaltet werden, sobald ein gewisser Pegelanstieg im Inneren des Gefäßes von den Temperatursensoren detektiert wird.

Dabei kann es möglich sein, dass alle Temperatursensoren der Temperaturmessvorrichtung mit der Steuer- und/oder Regeleinrichtung verbunden sind und dass wenigstens einer der Temperatursensoren für die Steuerung und/oder Regelung der Heizplatte oder des Rührantriebs auswählbar ist. So können an einem oder an mehreren bestimmten Temperatursensoren erfasste Temperaturveränderungen als Steuer- bzw. Regelgrößen für die Steuer- und/oder Regeleinrichtung dienen.

Besonders zweckmäßig kann es sein, wenn die Temperaturmessvorrichtung mit der Steuer- und/oder Regeleinrichtung über einen Draht und/oder über ein Kabel und/oder drahtlos, insbesondere über an der Temperaturmessvorrichtung und an der Steuer- und/oder Regeleinrichtung angeordnete Antennen, verbunden und/oder zum Datenaustausch miteinander eingerichtet sind.

Ferner ist es möglich, dass die Temperaturmessvorrichtung zur Anzeige der ermittelten Messwerte über einen Draht und/oder über ein Kabel und/oder drahtlos, insbesondere über eine Antenne, mit einem Anzeigegerät verbunden ist, von welchem Anzeigegerät ein Benutzer die aktuelle Temperatur bzw. die aktuellen Temperaturen eines jeden Temperatursensors ablesen kann.

Um weitere physikalische Größen neben der Temperatur des Mediums zu überwachen, kann es zweckmäßig sein, wenn die Temperaturmessvorrichtung neben den Temperatursensoren wenigstens einen weiteren Sensor für eine weitere physikalische Größe, insbesondere eine Hall-Sonde und/oder einen Hall-Sensor und/oder einen pH-Sensor, aufweist. Bei der Verwendung eines Hall-Sensors ist es möglich, die Drehzahl des Rührantriebes des Magnetrührers, also die Drehzahl eines magnetischen Drehfeldes oder die Drehzahl eines rotierenden Magneten des Rührantriebes zu überwachen und gegebenenfalls auch zu steuern bzw. zu regeln. Sinnvollerweise ist dieser Hall-Sensor dabei an dem dem Rührantrieb in Gebrauchsstellung zugewandten Ende der Temperaturmessvorrichtung angeordnet.

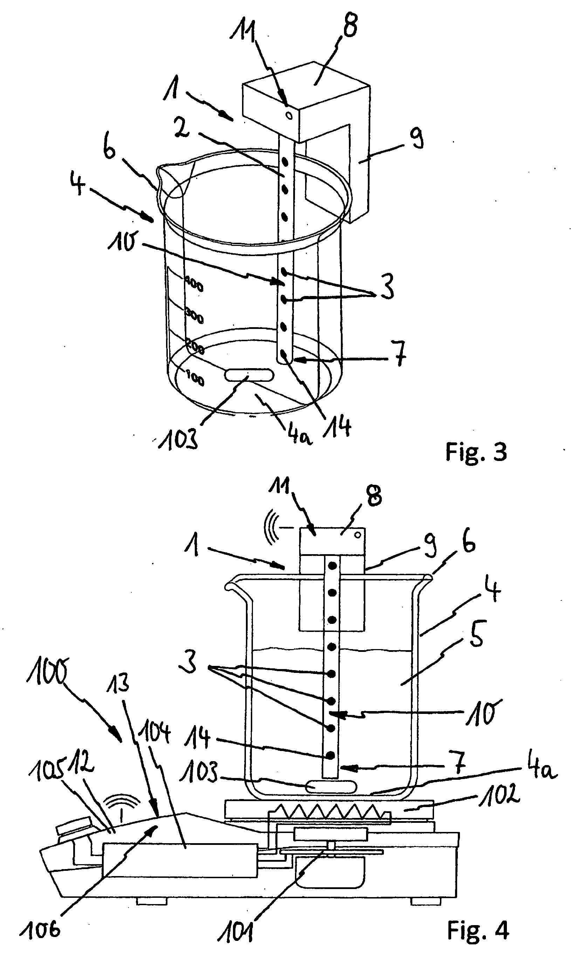

Nachstehend ist in den Figuren 3 und 4 ein Ausführungsbeispiel der Erfindung anhand der Zeichnung näher beschrieben. Es zeigt in zum Teil schematisierter Darstellung:
- Fig. 1:: eine perspektivische Darstellung eines Becherglases mit einer an einem Rand des Becherglases eingehängten, Temperaturmessvorrichtung mit mehreren Temperatursensoren,
- Fig. 2:: einen Längsschnitt durch das in Fig. 1 dargestellte, mit einem Medium gefüllte Becherglas und eine Seitenansicht der Temperaturmessvorrichtung, wobei die Temperaturmessvorrichtung sieben in das Medium eingetauchte Temperatursensoren und einen, an ihrem unteren Ende angeordneten, weiteren Sensor für eine andere physikalische Größe aufweist,
- Fig. 3:: eine perspektivische Darstellung eines weiteren Becherglases mit einer an einem Rand des Becherglases eingehängten, Temperaturmessvorrichtung, wobei im Inneren des Becherglases ein Rührmagnet zu erkennen ist, sowie
- Fig. 4:: eine geschnittene Seitenansicht eines erfindungsgemäßen Magnetrührers mit dem in Figur 3 dargestellten, auf einer Heizplatte des Magnetrührers aufgestelltem Becherglas.

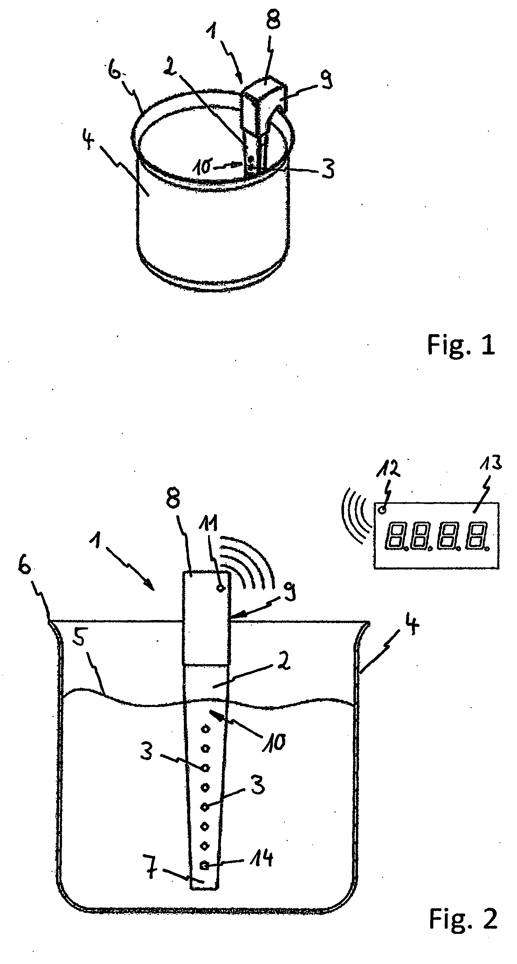

Eine im Ganzen mit 1 bezeichnete Temperaturmessvorrichtung hat gemäß den Figuren ein Thermometer 2 mit mehreren Temperatursensoren 3 auf elektrischer Basis. Figur 1 zeigt die Temperaturmessvorrichtung 1 in ihrer Gebrauchsstellung in einem Gefäß oder Becherglas 4. Gemäß Figur 2 und Figur 4 beinhaltet das Becherglas 4 ein flüssiges Medium 5, in welches Medium 5 die Temperatursensoren 3 der Temperaturmessvorrichtung 1 eingetaucht sind.

Um das Medium 5 im Inneren des Gefäßes 4 zu erwärmen, kann das Gefäß 4 auf eine Heizplatte 102 eines in Figur 4 dargestellten Magnetrührers 100 aufgestellt werden. Zum Rühren des Mediums 5 wird der Magnetrührer 100, der einen in Gebrauchsstellung in dem Gefäß 4 befindlichen Rührmagneten 103 über ein von einem Rührantrieb 101 des Magnetrührers 100 erzeugtes magnetisches Drehfeld antreibt.

Die Temperatursensoren 3 sind dabei in unterschiedlicher Höhe und mit vertikalem Abstand zueinander an der Temperaturmessvorrichtung 1 angeordnet. Der vertikale Abstand der Temperatursensoren 3 zueinander beträgt jeweils etwa einen halben bis einen Zentimeter. Es ist aber auch möglich die vertikalen Abstände zwischen den Temperatursensoren gegebenenfalls größer oder kleiner zu wählen. Die in den Figuren 1 bis 4 gezeigten Temperaturmessvorrichtungen 1 weisen insgesamt sieben bzw. acht übereinander angeordnete Temperatursensoren 3 auf. Insbesondere für größere und/oder tiefere Bechergläser oder Gefäße ist es auch denkbar, eine größere Anzahl von Temperatursensoren 3 an der Temperaturmessvorrichtung 1, vorzugsweise etwa zehn oder mehr Temperatursensoren 3, anzuordnen.

Ebenso ist es möglich, dass gemäß den Figuren stabförmig ausgebildete Thermometer 2 der Temperaturmessvorrichtung 1 in seiner Länge an unterschiedliche Bechergläser anzupassen. Je länger dabei das stabförmige Thermometer 2 der Temperaturmessvorrichtung 1 ist, desto mehr Temperatursensoren 3 können an dem Thermometer 2 angeordnet sein.

Insbesondere die Figuren 1, 3 und 4 zeigen, dass die Temperaturmessvorrichtung 1 an einem Rand 6 des Gefäßes 4 angebracht ist. Zu diesem Zweck hat die Temperaturmessvorrichtung 1 an einem in Gebrauchsstellung in das zu messende Medium 5 eingetauchten Ende 7 entgegengesetzten zweiten Ende 8 eine mechanische Halterung 9 zum Einhängen an den Rand 6 des Gefäßes 4, sodass die Temperaturmessvorrichtung 1 lösbar an dem Rand 6 des Gefäßes 4 lösbar zu befestigen ist.

In den in den Figuren gezeigten Ausführungsbeispielen besteht diese Halterung 9 darin, dass die Temperaturmessvorrichtung 1 im Bereich ihres zweiten Endes 8 selbst hakenförmig ausgebildet und somit an dem Rand 6 des Gefäßes 4 einhängbar ist.

In nicht dargestellten Ausführungsformen der Erfindung kann diese Halterung 9 als Haken ausgebildet sein. Ebenso kann die Temperaturmessvorrichtung 1 eine Stativbefestigung aufweisen, mit der die Temperaturmessvorrichtung 1 an marktüblichen Stativen befestigt werden kann.

Insbesondere bei der Ausführungsform der Temperaturmessvorrichtung 1 mit einer Stativbefestigung ist es dann möglich, die Temperaturmessvorrichtung 1 gegenüber ihrer Halterung 9 und gegenüber dem Gefäß 4, in das sie eingetaucht werden soll, in der Höhe zu verstellen. Somit kann die Position der Temperaturmessvorrichtung 1 im Inneren des Becherglases bzw. Gefäßes 4 an den Füll- bzw. Pegelstand des Mediums 5 angepasst werden.

Auch bei besonders tiefen Bechergläsern oder Gefäßen 4 ist es möglich, die Temperaturmessvorrichtung 1 dann soweit gegenüber ihrer Halterung 9 zu verstellen, dass die Temperatursensoren 3 der Temperaturmessvorrichtung 1 in das Medium 5 eintauchen.

Wie die Figuren 2 bis 4 zeigen, weist das in Gebrauchsstellung in das Medium 5 eingetauchte Ende 7 der Temperaturmessvorrichtung 1 einen Abstand zu einem Boden 4a des Gefäßes oder Becherglases 4 auf. Dieser Abstand ist dabei größer als eine Dicke und/oder Höhe des Rührmagneten 103.

Gemäß den Figuren sind sämtliche Temperatursensoren 3 an einer Seite 10 der Temperaturmessvorrichtung 1 angeordnet und weisen in ihrer Gebrauchsstellung in Richtung der Mitte des Gefäßes 4. So können die Temperatursensoren die Temperatur des Mediums 5 in einem Bereich messen, in dem das Medium 5 aufgrund der Erwärmung durch die in Figur 4 dargestellte Heizplatte 102 des Magnetrührers 100, auf die das Becherglas oder Gefäß 4 aufgestellt ist, am wärmsten ist.

Die vertikal beabstandete Anordnung der Temperatursensoren 3 an dem stabförmigen Thermometer 2 der Temperaturmessvorrichtung 1 ermöglicht es, eine durch die Erwärmung des Mediums 5, die mit Hilfe der Heizplatte 102 von unten geschieht, in dem Medium 5 entstehende Temperaturschichtung zu erkennen.

Diese Temperaturschichtung stellt eine inhomogene Temperaturverteilung im Medium 5 dar, die in vielen Anwendungsfällen nicht gewünscht ist. Um die Temperaturschichtung aufzubrechen und die Temperatur im gesamten Medium 5 zu homogenisieren, wird das Medium 5 über eine längere Zeit erwärmt und/oder, um diese Zeit zu verkürzen, mithilfe des Magnetrührers 100 durchmischt.

Mithilfe der Temperaturmessvorrichtung 1 ist es möglich, sowohl den Erwärmungsprozess als auch den Durchmischungsprozess zu überwachen und das Medium 5 genau so lange zu erhitzen bzw. zu durchrühren, bis das Medium 5 in seinem gesamten Volumen eine homogene Temperatur aufweist.

Die Temperatursensoren 3 der Temperaturmessvorrichtung 1 sind als Widerstandsthermometer ausgebildet. Zur Messung der Temperatur werden in den als Widerstandsthermometer ausgebildeten Temperatursensoren 3 Messströme eingesetzt, die zu einer eigentlich unbeabsichtigten, kurzzeitigen Erwärmung der Temperatursensoren führen.

Diese eigentlich nachteilige Eigenschaft der Widerstandsthermometer kann für eine weitere Funktion der erfindungsgemäßen Temperaturmessvorrichtung 1 ausgenutzt werden. So ist es möglich, dass mit den Temperatursensoren 3 nicht nur die Temperatur, sondern auch der Füllstand des Becherglases oder Gefäßes 4 gemessen werden kann. Dies ist vor allem dann von Interesse, wenn das Becherglas oder Gefäß 4 auf der Heizplatte 102 des Magnetrührers 100 aufgestellt ist, um das in dem Becherglas oder Gefäß 4 befindlichen Medium 5 über einen längeren Zeitraum zu erwärmen oder das Medium 5 einzukochen oder zu reduzieren.

Aufgrund der Verdunstung des Mediums 5 aus dem Becherglas oder Gefäß 4 verringert sich mit der Zeit der Füllstand im Becherglas oder Gefäß 4. Dabei sinkt der Pegel des Mediums 5 ab. Nach und nach treten dabei die Temperatursensoren 3 der Temperaturmessvorrichtung 1 - aufgrund ihres vertikalen Abstandes an der Seite 10 des Thermometers 2 der Temperaturmessvorrichtung 1 zueinander - aus dem Medium 5 heraus.

Bei einem Medium 5, das wärmer oder auch kälter als die Umgebungstemperatur ist, also insbesondere wärmer oder kälter als die Umgebungsluft, in der das Becherglas oder Gefäß 4 aufgestellt ist, führt ein Absinken des Füllstandes im Inneren des Becherglases oder Gefäßes 4 dazu, dass die Temperatursensoren 3 nicht mehr von dem wärmeren bzw. kälteren Medium 5 umgeben sind. Mit der Pegelveränderung im Gefäß 4 ergibt sich somit an den einzelnen Temperatursensoren nach und nach eine Temperaturveränderung, aus der der sich verändernde Pegelstand ableitbar ist.

Insbesondere bei Medien die gegebenenfalls bei Zimmertemperatur zur Verdunstung neigen, ist eine Füllstandsveränderung im Becherglas oder Gefäß 4 mit Hilfe der Temperaturmessvorrichtung 1 ebenfalls zu erkennen. Dabei spielen die unterschiedlichen Wärmeleitfähigkeiten der Umgebungsluft und des Mediums 5 eine Rolle.

Wie bereits weiter oben beschrieben, führt der in der Funktionsweise eines Widerstandsthermometers begründete Messstrom zu einer Erwärmung der einzelnen Temperatursensoren 3. Aufgrund der unterschiedlichen Wärmeleitfähigkeiten des Mediums 5 und der Umgebungsluft ist bei einem Austritt bzw. Eintritt eines Temperatursensors 3 in bzw. aus dem Medium 5 bei einer Temperaturmessung ein unterschiedliches Abkühlverhalten des Temperatursensors 3 zu beobachten.

Ist die Wärmeleitfähigkeit der Luft geringer als die Wärmeleitfähigkeit des Mediums 5, so ist bei einem Austritt des Temperatursensors 3 aus dem Medium 5 eine langsamere Abkühlung des aufgrund des Messstromes erwärmten Temperatursensors 3 zu beobachten.

Verhalten sich die Temperaturleitfähigkeiten der Umgebungsluft und des Mediums 5 umgekehrt, so ist zu beobachten, dass die Erwärmung des Temperatursensors 3 bei einem Austritt des Temperatursensors 3 aus dem Medium langsamer abklingt. Aus dem Abkühlverhalten der Temperatursensoren 3 lässt sich also auf den Füllstand des Gefäßes 4 schließen. Neben einem Absinken des Pegels kann selbstverständlich auch ein Anstieg des Pegels des Medium 5, der beispielsweise durch ein Aufkochen, Aufschäumen oder Aufquellen des Mediums 5 entstehen kann, zu erkennen.

In der in Figuren 3 und 4 dargestellten Ausführungsform der Erfindung ist wenigstens ein Temperatursensor 3 in Gebrauchsstellung der Temperaturmessvorrichtung außerhalb des zu messenden Mediums 5 oder außerhalb des Gefäßes 4 angeordnet. Dieser außerhalb des Mediums 5 bzw. außerhalb des Gefäßes 4 angeordnete Temperatursensor 3 liefert einen Temperatur-Referenzwert, mit dem die mit den innerhalb des Becherglases oder Gefäßes 4 angeordneten Temperatursensoren 3 ermittelten Temperaturmesswerte verglichen werden können. Aus dem Vergleich kann wiederum eine Pegelveränderung des Mediums 5 im Inneren des Gefäßes 4 abgeleitet werden.

Die Temperatursensoren 3 sind mit einer Steuer- und/oder Regeleinrichtung 104 für die Heizplatte 102 und/oder für den Rührantrieb 101 des Magnetrührers 100 verbunden. Die Verbindung kann über eine an dem zweiten, nicht eingetauchten Ende 8 der Temperaturmessvorrichtung 1 angeordnete Antenne 11 und/oder eine an dem Magnetrührer 100 angeordnete Antenne oder Empfangsantenne 105 drahtlos, insbesondere über Funk realisiert sein.

So ist es möglich, sowohl den Heiz- als auch den Rührvorgang in Abhängigkeit der mit Hilfe der Temperatursensoren 3 der Temperaturmessvorrichtung 1 ermittelten Temperaturen des Mediums 5 zu steuern bzw. zu regeln, also die Drehzahl des Rührantriebes 101 des Magnetrührers 100 zu überwachen und gegebenenfalls insbesondere in Abhängigkeit einer messbaren Temperaturschichtung bzw. in Abhängigkeit eines messbaren Temperaturverlaufs in dem zu erwärmenden Medium 5 auch zu steuern bzw. zu regeln.

Es ist aber auch denkbar, dass die Temperaturmessvorrichtung 1 mit der Steuer- und/oder Regeleinrichtung 104 über einen Draht bzw. ein Kabel in Verbindung. Gemäß Figur 2 sendet die Temperaturmessvorrichtung 1 über die Antenne 11 die von den Temperatursensoren 3 gemessenen Temperaturen des Mediums 5 an ein ebenfalls eine Antenne 12 aufweisendes Anzeigegerät 13, das im Ausführungsbeispiel gemäß Fig. 4 als ein Display 106 an dem Magnetrührer 100 ausgebildet ist. In einem nicht dargestellten Ausführungsbeispiel der Erfindung ist die Temperaturmessvorrichtung 1 über einen Draht bzw. ein Kabel mit dem Anzeigegerät 13 verbunden.

Das Anzeigegerät 13 bzw. der Magnetrührer 100 mit dem Display 106 und die Temperturmessvorrichtung 1 sind zum gegenseitigen Datenaustausch eingerichtet. Außerdem ist es möglich, dass die Temperaturmessvorrichtung 1, das Anzeigegerät 13, wie auch die Steuer- und/oder Regeleinrichtung 104 über Draht, über Kabel oder Drahtlos über Funk, insbesondere über die Antennen 11 und 12 bzw. die Empfangsantenne 105 des Magnetrührers 100 sowie gegebenenfalls eine weitere Antenne an der Steuer- und/oder Regeleinrichtung 104 miteinander in Kontakt stehen.

An dem in das Medium 5 eingetauchten Ende 7 ist gemäß Figur 2 außerdem ein weiterer Sensor 14 für eine weitere physikalische Größe zu erkennen. Dieser Sensor 14 ist im Ausführungsbeispiel eine Hall-Sonde bzw. ein Hall-Sensor, mit dem sich die Drehzahl des Rührantriebes 101 messen lässt, welcher Rührantrieb 101 den Rührmagneten 103 über sein magnetisches Drehfeld antreibt.

In anderen Ausführungsformen der Erfindung kann dieser Sensor 14 beispielsweise auch ein pH-Wert-Sensor oder ein anderer Sensor sein.

Die Temperaturmessvorrichtung 1 mit dem Thermometer 2 weist an einer Seite 10 mehrere Temperatursensoren 3 auf, die auf elektrischer Basis funktionieren. Das Thermometer 2 ist in das in Gebrauchsstellung auf der Heizplatte 102 des Magnetrührers 100 aufgestellte Gefäß oder Becherglas 4 und in das darin befindliche Medium 5 eingetaucht. Die mehreren Temperatursensoren 3 sind vertikal zueinander beabstandet an der Temperaturmessvorrichtung 1 angeordnet. Somit ist es möglich, einerseits eine Temperaturschichtung innerhalb des Mediums 5 zu erkennen und andererseits eine Pegelveränderung des Mediums 5 im Inneren des Gefäßes 4 zu erfassen.

## Patentansprüche

1. Magnetrührer (100) mit einem Rührantrieb (101), mit einem Gefäß oder Becherglas (4), mit einer Heizplatte (102) als Aufstellfläche für das Gefäß oder Becherglas (4) und mit einem in das Gefäß oder Becherglas (4) einlegbaren oder eingelegten, von dem Rührantrieb (101) angetriebenen Rührmagneten (103) sowie mit einer Temperaturmessvorrichtung (1) mit einem Thermometer (2) mit einem Temperatursensor (3) auf elektrischer Basis, die in ein in dem Gefäß oder Becherglas (4) befindliches Medium (5) eintauchbar oder eingetaucht ist, **dadurch gekennzeichnet, dass** die Temperaturmessvorrichtung (1) wenigstens drei in Gebrauchsstellung in das zu messende Medium (5) eintauchbare, in unterschiedlicher Höhe und/oder mit vertikalem Abstand zueinander angeordnete Temperatursensoren (3) aufweist, dass wenigstens ein Temperatursensor (3) in Gebrauchsstellung der Temperaturmessvorrichtung (1) außerhalb des Gefäßes (4) anordenbar ist, dass die Temperaturmessvorrichtung (1) an einem Rand (6) des Gefäßes (4) lösbar anbringbar ist und dass die Temperaturmessvorrichtung (1) an einem in Gebrauchsstellung einem in das zu messende Medium (5) eingetauchten Ende (7) entgegengesetzten zweiten Ende (8) eine mechanische Halterung (9) zum Einhängen an dem Rand (6) des Gefäßes (4) aufweist und/oder dass das in Gebrauchsstellung nicht in das Medium eingetauchte Ende der Temperaturmessvorrichtung (1) selbst hakenförmig ausgebildet ist.

2. Magnetrührer (100) nach Anspruch 1, **dadurch gekennzeichnet, dass** das in Gebrauchsstellung in das Medium (5) eingetauchtes Ende (7) der Temperaturmessvorrichtung (1) einen Abstand zu einem Boden (4a) des Gefäßes oder Becherglases (4) aufweist.

3. Magnetrührer (100) nach Anspruch 1 oder 2, **dadurch gekennzeichnet, dass** der in Gebrauchsstellung vertikale Abstand zwischen den Temperatursensoren (3) jeweils wenigstens zwei Zentimeter, bevorzugt etwa einen Zentimeter, gegebenenfalls etwa einen halben Zentimeter oder weniger beträgt.

4. Magnetrührer (100) nach einem der Ansprüche 1 bis 3, **dadurch gekennzeichnet, dass** das die Temperaturmessvorrichtung (1) bildende Thermometer (2) stabförmig ausgebildet und/oder mit einem seiner beiden Enden (7, 8) in das Medium (5) eintauchbar ist.

5. Magnetrührer (100) nach einem der Ansprüche i bis 4, **dadurch gekennzeichnet, dass** die Temperaturmessvorrichtung (1) an ihrem dem in Gebrauchsstellung in das zu messende Medium (5) eingetauchten Ende (7) entgegengesetzten zweiten Ende (8) als mechanische Halterung (9) zum Einhängen an dem Rand (6) des Gefäßes (4) einen Haken oder ein Klemmelement oder einen Saugnapf und/oder als Halterung (9) eine Stativbefestigung aufweist.

6. Magnetrührer (100) nach einem der Ansprüche 1 bis 5 **dadurch gekennzeichnet, dass** die Temperaturmessvorrichtung (1) gegenüber ihrer Halterung (9) höhenverstellbar ist.

7. Magnetrührer (100) nach einem der Ansprüche 1 bis 6, **dadurch gekennzeichnet, dass** wenigstens einer der Temperatursensoren (3) oder alle Temperatursensoren (3) an einer Seite (10) der Temperaturmessvorrichtung (1) angeordnet sind, die in Gebrauchsstellung der Mitte des Gefäßes (4) zugewandt ist.

8. Magnetrührer (100) nach einem der Ansprüche 1 bis 7, **dadurch gekennzeichnet, dass** die Temperatursensoren (3) der Temperaturmessvorrichtung (1) als Widerstandsthermometer ausgebildet sind.

9. Magnetrührer (100) nach einem der Ansprüche 1 bis 8, **dadurch gekennzeichnet, dass** wenigstens ein Temperatursensor (3) in Gebrauchsstellung der Temperaturmessvorrichtung (1) außerhalb des zu messenden Mediums (5) angeordnet ist.

10. Magnetrührer (100) nach einem der Ansprüche 1 bis 9, **dadurch gekennzeichnet, dass** wenigstens einer der Temperatursensoren (3) mit einer Steuer- und/oder Regeleinrichtung (104) für die Heizplatte (102) und/oder für den Rührantrieb (101) verbunden ist.

11. Magnetrührer (100) nach einem der Ansprüche 1 bis 10, **dadurch gekennzeichnet, dass** alle Temperatursensoren (3) der Temperaturmessvorrichtung (1) mit der Steuer- und/oder Regeleinrichtung verbunden sind und dass wenigstens einer der Temperatursensoren (3) für die Steuerung und/oder Regelung der Heizplatte (102) oder des Rührantriebs (101) auswählbar ist.

12. Magnetrührer (100) nach einem der Ansprüche 1 bis 11, **dadurch gekennzeichnet, dass** die Temperaturmessvorrichtung (1) mit der Steuer- und/oder Regeleinrichtung (104) über einen Draht und/oder über ein Kabel und/oder drahtlos, insbesondere über an der Temperaturmessvorrichtung (1) und an der Steuer- und/oder Regeleinrichtung (104) angeordnete Antennen (105), verbunden und/oder zum Datenaustausch miteinander eingerichtet sind.

13. Magnetrührer(100)nach einem der Ansprüche 1 bis 12, **dadurch gekennzeichnet, dass** die Temperaturmessvorrichtung (1) zur Anzeige der ermittelten Messwerte über einen Draht und/oder über ein Kabel und/oder drahtlos, insbesondere über eine Antenne (12), mit einem Anzeigegerät (13, 106) verbunden ist.

14. Magnetrührer (100) nach einem der Ansprüche 1 bis 13, **dadurch gekennzeichnet, dass** die Temperaturmessvorrichtung (1) zusätzlich zu den Temperatursensoren (3) wenigstens einen weiteren Sensor (14) für eine weitere physikalische Größe, insbesondere eine Hall-Sonde oder einen Hall-Sensor, aufweist.

## Claims

1. Magnetic stirrer (100) having a stirring drive unit (101), having a container or beaker (4), having a heating plate (102) as a surface for placement of the container or beaker (4), and having a stirring magnet (103) which is or can be inserted into the container or beaker (4) and is driven by the stirring drive unit (101), and having a temperature measuring device (1) with a thermometer (2) with an electrical temperature sensor (3), which is dipped or can be dipped into a medium (5) located in the container or beaker (4), **characterised in that** the temperature measuring device (1) has at least three temperature sensors (3) which, in the position of use, can be dipped into the medium (5) to be measured and which are arranged at different heights and/or with a vertical spacing from each other, **in that** at least one temperature sensor (3) in the position of use of the temperature measuring device (1) can be arranged outside the container (4), **in that** the temperature measuring device (1) can be detachably mounted on one edge (6) of the container (4), and **in that** the temperature measuring device (1) has a mechanical holder (9) for hanging from the edge (6) of the container (4), at a second end (8) which, in the position of use, is opposite an end (7) dipped into the medium (5) to be measured, and/or **in that** the end of the temperature measuring device (1) not dipped into the medium in the position of use is itself is hook-shaped.

2. Magnetic stirrer (100) as claimed in claim 1, **characterised in that** the end (7) of the temperature measuring device (1) which is dipped into the medium (5) in the position of use has a spacing from a bottom (4a) of the container or beaker (4).

3. Magnetic stirrer (100) as claimed in claim 1 or 2, **characterised in that** the vertical spacing between the temperature sensors (3) in the position of use is at least two centimetres in each case, preferably about one centimetre, optionally about half a centimetre or less.

4. Magnetic stirrer (100) as claimed in any one of claims 1 to 3, **characterised in that** the thermometer (2) forming the temperature measuring device (1) is rod-shaped and/or can be dipped with one of its two ends (7, 8) into the medium (5).

5. Magnetic stirrer (100) as claimed in any one of claims 1 to 4, **characterised in that** the temperature measuring device (1) has, as a mechanical holder (9) for hanging from the edge (6) of the container (4), a hook or a clamping element or a suction cup, and/or has, as a holder (9), a tripod mount, at its second end (8) opposite the end (7) which, in the position of use, is dipped into the medium (5) to be measured.

6. Magnetic stirrer (100) as claimed in any one of claims 1 to 5, **characterised in that** the temperature measuring device (1) is height-adjustable in relation to its holder (9).

7. Magnetic stirrer (100) as claimed in any one of claims 1 to 6, **characterised in that** at least one of the temperature sensors (3) or all of the temperature sensors (3) are arranged on one side (10) of the temperature measuring device (1) which faces the centre of the container (4) in the position of use.

8. Magnetic stirrer (100) as claimed in any one of claims 1 to 7, **characterised in that** the temperature sensors (3) of the temperature measuring device (1) are configured as resistance thermometers.

9. Magnetic stirrer (100) as claimed in any one of claims 1 to 8, **characterised in that** at least one temperature sensor (3) in the position of use of the temperature measuring device (1) is arranged outside the medium (5) to be measured.

10. Magnetic stirrer (100) as claimed in any one of claims 1 to 9, **characterised in that** at least one of the temperature sensors (3) is connected to a control and/or regulating device (104) for the heating plate (102) and/or for the stirring drive unit (101).

11. Magnetic stirrer (100) as claimed in any one of claims 1 to 10, **characterised in that** all of the temperature sensors (3) of the temperature measuring device (1) are connected to the control and/or regulating device and **in that** at least one of the temperature sensors (3) can be selected for the control and/or regulation of the heating plate (102) or the stirring drive unit (101).

12. Magnetic stirrer (100) as claimed in any one of claims 1 to 11, **characterised in that** the temperature measuring device (1) is connected to the control and/or regulating device (104) via a wire and/or via a cable and/or wirelessly, in particular via antennas (105) arranged on the temperature measuring device (1) and on the control and/or regulating device (104), and/or said devices are configured for data exchange therebetween.

13. Magnetic stirrer (100) as claimed in any one of claims 1 to 12, **characterised in that**, in order to display the detected measurement values, the temperature measuring device (1) is connected to a display device (13, 106) via a wire and/or via a cable and/or wirelessly, in particular via an antenna (12).

14. Magnetic stirrer (100) as claimed in any one of claims 1 to 13, **characterised in that** the temperature measuring device (1) has, in addition to the temperature sensors (3), at least one further sensor (14) for a further physical variable, in particular a Hall probe and/or a Hall sensor.

## Revendications

1. Agitateur magnétique (100) équipé d'un entraînement d'agitation (101), avec un vase ou un bécher (4), avec une plaque chauffante (102) comme surface de pose pour le vase ou le bécher (4) et avec un aimant d'agitation (103) pouvant être ou étant introduit dans le vase ou le bécher (4) et entraîné par l'entraînement d'agitation (101) ainsi qu'avec un dispositif de mesure de la température (1) équipé d'un thermomètre (2) avec un capteur de température (3) à base électrique, qui peut être ou qui est plongé dans un milieu (5) se trouvant dans le vase ou le bécher (4), **caractérisé en ce que** le dispositif de mesure de la température (1) présente au moins trois capteurs de température (3) pouvant être plongés en position d'utilisation dans le milieu à mesurer (5) et disposés à une hauteur différente et/ou avec une distance verticale l'un par rapport à l'autre, **en ce qu'**au moins un capteur de température (3) peut être disposé à l'extérieur du vase (4) en position d'utilisation du dispositif de mesure de la température (1), **en ce que** le dispositif de mesure de la température (1) peut être installé de façon amovible sur un bord (6) du vase (4) et **en ce que** le dispositif de mesure de la température (1) présente, à une deuxième extrémité (8) opposée à une extrémité (7) plongée en position d'utilisation dans le milieu à mesurer (5), un support mécanique (9) à suspendre au bord (6) du vase (4) et/ou **en ce que** l'extrémité du dispositif de mesure de la température (1) non plongée dans le milieu en position d'utilisation est elle-même configurée en forme de crochet.

2. Agitateur magnétique (100) selon la revendication 1, **caractérisé en ce que** l'extrémité (7) du dispositif de mesure de la température (1) plongée dans le milieu à mesurer (5) présente une distance par rapport à un fond (4a) du vase ou du bécher (4).

3. Agitateur magnétique (100) selon la revendication 1 ou 2, **caractérisé en ce que** la distance verticale entre les capteurs de température (3) en position d'utilisation vaut respectivement au moins deux centimètres, de préférence environ un centimètre, éventuellement environ un demi-centimètre ou moins.

4. Agitateur magnétique (100) selon l'une quelconque des revendications 1 à 3, **caractérisé en ce que** le thermomètre (2) formant le dispositif de mesure de la température (1) est réalisé en forme de barreau et/ou peut être plongé dans le milieu (5) par une de ses deux extrémités (7, 8).

5. Agitateur magnétique (100) selon l'une quelconque des revendications 1 à 4, **caractérisé en ce que** le dispositif de mesure de la température (1) présente, à sa deuxième extrémité (8) opposée à l'extrémité (7) plongée en position d'utilisation dans le milieu à mesurer (5), comme support mécanique (9) à suspendre au bord (6) du vase (4), un crochet ou un élément de serrage ou une ventouse et/ou comme support (9) une fixation de pied.

6. Agitateur magnétique (100) selon l'une quelconque des revendications 1 à 5, **caractérisé en ce que** le dispositif de mesure de la température (1) est réglable en hauteur par rapport à son support (9).

7. Agitateur magnétique (100) selon l'une quelconque des revendications 1 à 6, **caractérisé en ce qu'**au moins un des capteurs de température (3) ou tous les capteurs de température (3) sont disposés sur un côté (10) du dispositif de mesure de la température (1), qui est tourné en position d'utilisation vers le centre du vase (4).

8. Agitateur magnétique (100) selon l'une quelconque des revendications 1 à 7, **caractérisé en ce que** les capteurs de température (3) du dispositif de mesure de la température (1) sont réalisés sous forme de thermomètres à résistance.

9. Agitateur magnétique (100) selon l'une quelconque des revendications 1 à 8, **caractérisé en ce qu'**au moins un capteur de température (3) est disposé, en position d'utilisation du dispositif de mesure de la température (1), à l'extérieur du milieu à mesurer (5).

10. Agitateur magnétique (100) selon l'une quelconque des revendications 1 à 9, **caractérisé en ce qu'**au moins un des capteurs de température (3) est relié à un dispositif de commande et/ou de régulation (104) pour la plaque chauffante (102) et/ou pour l'entraînement d'agitation (101).

11. Agitateur magnétique (100) selon l'une quelconque des revendications 1 à 10, **caractérisé en ce que** tous les capteurs de température (3) du dispositif de mesure de la température (1) sont reliés au dispositif de commande et/ou de régulation et **en ce qu'**au moins un des capteurs de température (3) peut être choisi pour la commande et/ou la régulation de la plaque chauffante (102) ou de l'entraînement d'agitation (101).

12. Agitateur magnétique (100) selon l'une quelconque des revendications 1 à 11, **caractérisé en ce que** le dispositif de mesure de la température (1) est relié au dispositif de commande et/ou de régulation (104) par un fil et/ou par un câble et/ou sans fil, en particulier par des antennes (105) disposées sur le dispositif de mesure de la température (1) et sur le dispositif de commande et/ou de régulation (104) et/ou ils sont conçus pour un échange de données entre eux.

13. Agitateur magnétique (100) selon l'une quelconque des revendications 1 à 12, **caractérisé en ce que** le dispositif de mesure de la température (1) est relié par un fil et/ou par un câble et/ou sans fil, en particulier par une antenne (12), à un appareil d'affichage (13, 106) pour l'affichage des valeurs de mesure déterminées.

14. Agitateur magnétique (100) selon l'une quelconque des revendications 1 à 13, **caractérisé en ce que** le dispositif de mesure de la température (1) présente, en plus des capteurs de température (3), au moins un autre capteur (14) pour une autre grandeur physique, en particulier une sonde de Hall ou un capteur à effet Hall.
